# EUROPÄISCHE PATENTSCHRIFT

(11) **EP 2 100 199 B1**
(45) Veröffentlichungstag und Bekanntmachung des Hinweises auf die Patenterteilung: **13.07.2011**
(21) Anmeldenummer: 07819597.1
(22) Anmeldetag: 05.11.2007
(51) Int. Cl.: G05D 3/10

(54) **WECHSELRICHTER MIT INTEGRIERTER ANSTEUERUNG UND REGELUNG FÜR EINEN TRACKER**
INVERTER WITH INTEGRATED CONTROLLER AND REGULATOR FOR A TRACKER
ONDULEUR AVEC COMMANDE ET RÉGULATION D'UN SUIVEUR INTÉGRÉES

(30) Priorität: 13.12.2006 DE 102006058845
(43) Veröffentlichungstag der Anmeldung: 16.09.2009
(73) Patentinhaber: Fraunhofer-Gesellschaft zur Förderung der angewandten Forschung e.V., 80686 München (DE); Concentrix Solar GmbH, 79111 Freiburg (DE)
(72) Erfinder: BURGER, Bruno, 79110 Freiburg (DE); LERCHENMÜLLER, Hansjörg, 79100 Freiburg (DE)
(74) Vertreter: Zimmermann, Tankred Klaus
(86) Internationale Anmeldenummer: PCT/EP2007/009576
(87) Internationale Veröffentlichungsnummer: WO 2008/071266

(56) Entgegenhaltungen:
- EP-A- 1 632 786
- WO-A-2008/025004
- US-A- 4 223 214
- US-A- 4 320 288

## Beschreibung

Die vorliegende Erfindung bezieht sich auf das Gebiet der Erzeugung elektrischer Energie basierend auf Sonnenenergie, und hier insbesondere auf einen Wechselrichter zur Umwandlung des von einem Solargenerator gelieferten Gleichstroms in einen Wechselstrom, wobei der Solargenerator einen Antrieb aufweist, der abhängig von einem Steuersignal eine Nachführung des Solargenerators nach der Sonne ermöglicht.

Vorrichtungen zum Nachführen eines Solargenerators auf den aktuellen Sonnenstand, sogenannte Tracker, sind im Stand der Technik bekannt, wobei ein Beispiel in der DE 202 04 679 U1 beschrieben wird. Die Antriebe solcher Vorrichtungen führen die Solargeneratoren in Azimut- und/oder Elevationsrichtung derart der Sonne nach, dass immer die maximal mögliche Solarstrahlung auf den Solargenerator auftritt. Bekannte Anlagen, die eine Nachführung in Azimut- und Elevationsrichtung ermöglichen, weisen beispielsweise am Ende eines Tragmastes einen Drehkranz für die Einstellung des Azimuts (Ost-West-Richtung) und eine in der Länge veränderbare Positionierstange für die Einstellung der Elevation (Neigung) auf.

Solche Nachführanlagen oder "Tracker" sind wirksam mit einer Steuerung bzw. Regelung verbunden, die den Tracker bzw. dessen Antriebselemente derart ansteuert, dass der Solargenerator ständig zur hellsten Stelle am Himmel ausgerichtet ist. Solche Steuerungen werden als eigenständige Geräte aufgebaut und arbeiten autark. Ein Beispiel für eine solche Steuerung ist in der DE 100 43 525 A1 beschrieben, die eine Vorrichtung zum Nachstellen einer Solaranlage auf den aktuellen Sonnenstand beschreibt, wobei als Sensoren Solarzellen verwendet werden.

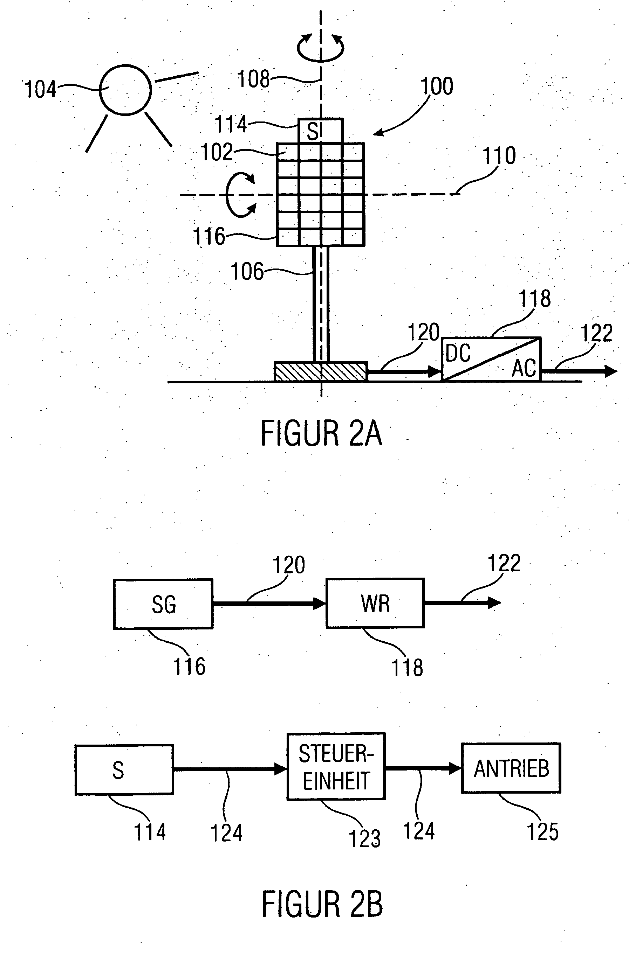

Die Fig. 2A zeigt beispielhaft einen bekannten Aufbau einer nachgeführten Solaranlage. Die Solaranlage umfasst zumindest einen Solargenerator 116, der eine Mehrzahl von Solarmodulen 102 umfasst, die bei Auftreffen von Licht von der Sonne 104 elektrische Energie erzeugen, beispielsweise in der Form eines Gleichstromes. Die Solarmodule 102 sind auf einem Tracker 100 montiert. Über einen, in der Fig. 2A nicht gezeigten Antrieb des Trackers 100 wird die Verstellung des Solargenerators 116 um die Achsen 108 und 110 ermöglicht, wobei der Antrieb beispielsweise auf einem Mast 106 montiert sein kann. Durch den Antrieb wird eine Nachführung des Solargenerators 116 nach der Sonne 104 über den Verlauf des Tages ermöglicht.

Bei dem in Fig. 2A beispielhaft gezeigten, herkömmlichen Ansatz ist zusätzlich zu dem Solargenerator 116 die Steuereinheit 123 für den Tracker 100 vorgesehen, die bei dem gezeigten Beispiel an dem Tracker 100 angeordnet ist, der auch die Solarmodule 102 trägt. Die Steuereinheit 123 kann aber auch an anderer Stelle getrennt von dem Tracker 100 vorgesehen sein. Die Steuereinheit 123 umfasst einen Sensor oder Detektor 114, der abhängig von dem darauf einfallenden Licht ein Intensitätssignal erzeugt, welches einer in der Steuereinheit integrierten Steuerung bereitgestellt wird, die ihrerseits ein Steuersignal an den Antrieb 125 des Trackers 100 weitergibt, um eine optimale Ausrichtung des Solargenerators 116 auf den hellsten Punkt am Himmel sicherzustellen. Der Tracker 100 umfasst neben dem Antrieb auch den Mast 106.

Die Solaranlage umfasst ferner einen Wechselrichter 118 der über eine in Fig. 2A schematisch gezeigte Verbindung 120 den von dem Solargenerator 116 erzeugten Gleichstrom empfängt. Der Wechselrichter 118 umfasst eine Umwandlungseinrichtung DC/AC, um den empfangenen Gleichstrom in einen Wechselstrom umzuwandeln. Der erzeugte Wechselstrom wird an einem schematisch gezeigten Ausgang 122 des Wechselrichters 118 ausgegeben.

In Fig. 2B ist die in Fig. 2A gezeigte Anordnung schematisch dargestellt, und wie zu erkennen ist, erzeugt der Sensor 114 ein Sensorsignal, das über die Sensorsignalverbindung 124 einer Steuereinheit 123 bereitgestellt wird. Die Steuereinheit 123 erzeugt ein Ansteuersignal für den Antrieb 125 (Motor) des Trackers 100, das über die Steuersignalverbindung 124 übertragen wird. Ferner sind der Solargenerator 116 und der Wechselrichter 118 gezeigt, die über die elektrische Leitung 120 verbunden sind. Der Wechselrichter 118 gibt über die Leitung 122 einen Wechselstrom aus.

Die in der Fig. 2 beschriebene herkömmliche Anordnung, gemäß der getrennte Elemente 116 und 118 bzw. 114, 123 und 125 verwendet werden, ist dahingehend vorteilhaft, dass die Regelung bzw. Steuerung 123 unabhängig vom Rest des Systems arbeiten kann, und somit mit verschiedenen Solarmodulen und Wechselrichtern betrieben werden kann.

Der Nachteil dieser Vorgehensweise besteht darin, dass hier aufgrund der Vielzahl von Elementen vergleichsweise hohe Kosten entstehen, und ferner besteht durch den eigenständigen Betrieb der Trackerregelung bzw. -steuerung 114 und der Steuerung bzw. Regelung des Wechselrichters 118 nicht die Möglichkeit einer Verknüpfung beider Regelungen.

Ausgehend von diesem Stand der Technik liegt der vorliegenden Erfindung die Aufgabe zugrunde, eine verbesserte Steuerung/Regelung einer nachgeführten Solaranlage unter Vermeidung unnötiger Kosten zu ermöglichen.

Diese Aufgabe wird durch einen Wechselrichter gemäß Anspruch 1 gelöst.

Die vorliegende Erfindung schafft ferner eine Solaranlage, die den erfindungsgemäßen Wechselrichter verwendet.

Die vorliegende Erfindung schafft einen Wechselrichter zur Umwandlung des von einem Solargenerator gelieferten Gleichstroms in einen Wechselstrom, wobei der Solargenerator einen Antrieb aufweist, der eine Ausrichtung des Solargenerators in eine erwünschte Richtung ermöglicht, wobei in dem Wechselrichter eine Steuerung integriert ist, die ein Steuersignal für den Antrieb des Solargenerators bereitstellt, um ein Nachführen des Solargenerators zu bewirken.

Gemäß einem ersten, bevorzugten Ausführungsbeispiel umfasst der Wechselrichter ferner zumindest einen Sensor, der ein Intensitätssignal abhängig von dem auf den Sensor auftreffenden Licht erzeugt, wobei die Steuerung das Intensitätssignal empfängt und basierend auf dem Intensitätssignal das Steuersignal bereitstellt, wobei der Wechselrichter ferner einen Steuersignalausgang aufweist, an den die Steuerung das Steuersignal anlegt.

Gemäß einem weiteren, bevorzugten Ausführungsbeispiel umfasst der Wechselrichter einen Sensorsignaleingang zum Empfangen eines Intensitätssignals, das ein externer Sensor abhängig von dem auf den Sensor auftreffenden Licht erzeugt, wobei die Steuerung mit dem Sensorsignaleingang verbunden ist, um das Intensitätssignal zu empfangen, und um basierend auf dem Intensitätssignal das Steuersignal zu erzeugen, wobei der Wechselrichter ferner einen Steuersignalausgang aufweist, an den die Steuerung das Steuersignal anlegt. Vorzugsweise handelt es sich bei dem externen Sensor um einen an dem Tracker angebrachten Sensor. Alternativ kann der externe Sensor durch eine oder mehrere Solarmodule des Solargenerators gebildet sein.

Vorzugsweise umfasst der Wechselrichter eine Steuereinheit, die beispielsweise einen Prozessor umfasst, die die Umwandlung des Gleichstroms in den Wechselstrom steuert, wobei die Steuerung zur Erzeugung des Steuersignals für den Antrieb des Solarmoduls in diese Steuereinheit integriert ist.

Der erfindungsgemäße Ansatz, die Regelung/Steuerung für den Tracker in den Wechselrichter zu integrieren, ist vorteilhaft, da sich hier durch große Kosteneinsparungen ergeben, da der Wechselrichter diese zusätzliche Aufgabe mit einem minimalen Mehraufwand realisieren kann. Insbesondere entfallen die zusätzlichen Kosten für eine weiteres Gehäuse, eine zusätzliche Stromversorgung, eine zusätzliche Schnittstelle zum Datenaustausch, einen weiteren Prozessor und ähnliches. Ferner wird erfindungsgemäß durch die Kombination beider Regelungen das Verhalten/die Performance des Gesamtsystems der Solaranlage deutlich erhöht. Außerdem erhöht sich der Gesamtwirkungsgrad der nachgeführten Solaranlage, da die elektrischen Verluste der zusätzlichen Steuerung entfallen.

Bevorzugte Ausgestaltungen der vorliegenden Erfindung werden nachfolgend unter Bezugnahme auf die beiliegenden Zeichnungen näher erläutert. Es zeigen:
- Fig. 1A und 1B: ein Ausführungsbeispiel einer nachge- führten Solaranlage, die einen erfin- dungsgemäßen Wechselrichter aufweist; und
- Fig. 2 A und 2B: ein Beispiel für eine herkömmliche nachgeführte Solaranlage.

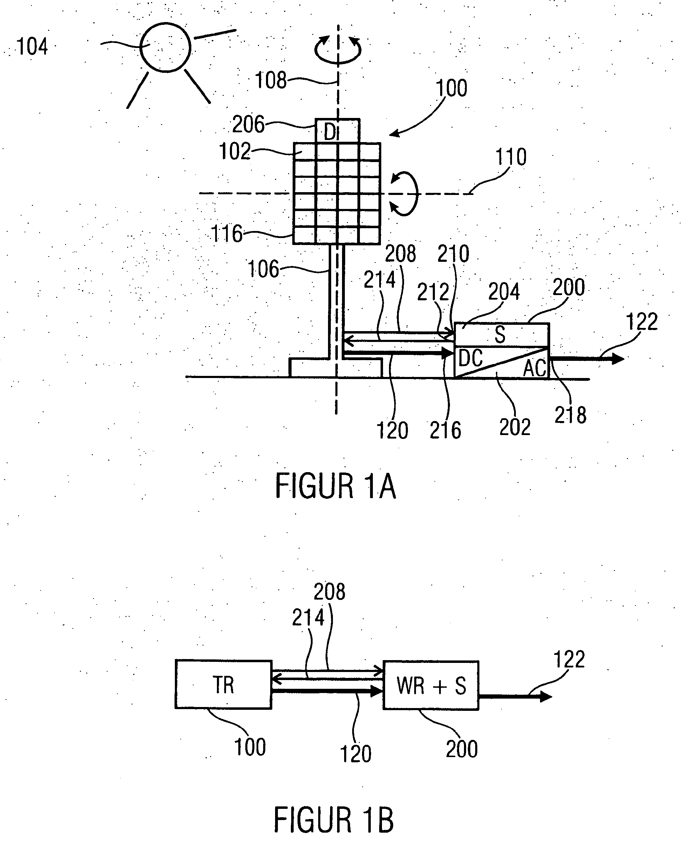

Fig. 1A zeigt eine schematische Darstellung einer Solaranlage, die ähnlich wie in Fig. 2 einen Solargenerator 116 umfasst, der eine Mehrzahl von Solarmodulen 102 aufweist und auf dem Tracker 100 befestigt ist. Durch einen in Fig. 1 nicht gezeigten Antrieb ist der Solargenerator 116 um die Achsen 108 und 110 drehbar gelagert und nach der Sonne 104 nachführbar.

Anders als bei dem anhand der Fig. 2 beschriebenen, herkömmlichen Ansatz ist bei dem in Fig. 1A gezeigten Ausführungsbeispiel der vorliegenden Erfindung ein Wechselrichter 200 vorgesehen, der die Umwandlungsschaltung 202 zum Umwandeln eines empfangenen Gleichstroms (DC) in einen Wechselstrom (AC) umfasst. Ferner ist in dem Wechselrichter 200 die Steuerung/Regelung 204 integriert, die ein Ansteuersignal für den Tracker 100 erzeugt, um dessen Antrieb dahingehend anzusteuern, dass der Solargenerator 116 über den Tag der Sonne 104 bzw. dem hellsten Punkt am Himmel (z.B. bei Bewölkung) nachgeführt wird.

Bei dem in Fig. 1A gezeigten Ausführungsbeispiel ist ferner ein Sensor bzw. Detektor 206 vorgesehen, der ein Intensitätssignal abhängig von dem einfallenden Licht erzeugt und über eine Sensorsignalverbindung 208 einem Eingang 210 des Wechselrichters 200 bereitstellt. Die Steuerung 204 in dem Wechselrichter 200 ist mit dem Eingang 210 verbunden, um abhängig von dem empfangenen Intensitätssignal ein Steuersignal für den Antrieb des Trackers 100 zu erzeugen und an einem Steuersignalausgang 212 des Wechselrichters 200 bereitzustellen. Bei dem gezeigten Ausführungsbeispiel wird das Steuersignal über die Steuersignalleitung 214 von dem Wechselrichter 200 dem Tracker 100 bereitgestellt, um eine entsprechende Einstellung des Antriebs zu ermöglichen.

Im Zusammenhang mit der Detektoreinrichtung 206 wird darauf hingewiesen, dass diese eine oder mehrere Sensorzellen umfassen kann, wobei im Fall der Bereitstellung mehrerer Sensorzellen auch mehrere Intensitätssignale an die Steuerung 204 bereitgestellt werden, die dann zur Nachführung des Solargenerators ausgewertet werden, beispielsweise in einer Art, wie sie in der DE 100 43 525 A1 beschrieben wird.

Der Wechselrichter umfasst ferner den Gleichstromeingang 216 und den Wechselstromausgang 218 um, ähnlich wie in Fig. 2, über die Leitungen 120 und 122 den Gleichstrom von dem Solargenerator 116 zu empfangen bzw. den umgewandelten Wechselstrom auszugeben.

Fig. 1B zeigt die anhand der Fig. 1A beschriebene Anordnung nochmals schematisch.

Erfindungsgemäß wird eine Einsparung der erforderlichen Kosten dadurch erreicht, dass für die Implementierung der Steuerung zum Erzeugen des Nachführungssignals für den Solargenerator auf die Betriebsmittel des Wechselrichters zurückgegriffen wird, der zur Umwandlung des Gleichstroms in den Wechselstrom bereits neben den erforderlichen Leistungsschaltungen auch eine entsprechende Steuereinheit aufweist, z.B. in der Form eines Mikroprozessors und entsprechender Speicherelemente. Zur Implementierung der Steuerung für die Nachführung des Solargenerators kann somit auf diese Ressourcen zurückgegriffen werden, so dass sich neben einer kompakten Bauweise auch die oben erwähnte Kostenersparnis erreichen lässt.

Ferner kann durch die Kombination der Regelungen/Steuerungen für die Stromwandlung bzw. für die Nachführung das Verhalten des Gesamtsystems deutlich verbessert und der Gesamtwirkungsgrad erhöht werden.

Anhand der Fig. 1 wurde ein Ausführungsbeispiel beschrieben, bei dem der Detektor bzw. der Sensor 206 als ein Teil des Trackers 100 dargestellt ist. Die vorliegende Erfindung ist nicht auf eine solche Ausgestaltung beschränkt, vielmehr kann bei einem anderen Ausführungsbeispiel der Detektor bzw. die Sensorzellen 206 ebenfalls in den Wechselrichter integriert werden, und in einem solchen Fall würde die Sensorsignalleitung 208 und der entsprechende Sensorsignaleingang 210 wegfallen, was zu einer weiteren Vereinfachung im Hinblick auf den Einsatz des Wechselrichters führen würde, da dieser dann auch mit herkömmlichen nachgeführten Solaranlagen betrieben werden kann, ohne dass eine Nachrüstung dieser mit einem Detektor und entsprechender Sensorleitung erforderlich wäre.

Gemäß einem weiteren Ausführungsbeispiel kann der Detektor als separater Detektor ausgestaltet sein, der extern von dem Solargenerator bzw. Tracker und extern von dem Wechselrichter angeordnet ist, und über eine entsprechende Sensorsignalleitung mit dem Sensorsignaleingang 210 des Wechselrichters 200 verbunden ist.

Gemäß einem weiteren Ausführungsbeispiel kann auf den Detektor verzichtet werden. In diesem Fall erfolgt durch die Steuereinheit des Wechselrichters eine Nachführung des Solargenerators auf Basis astronomischer Berechnungen.

## Patentansprüche

1. Wechselrichter zur Umwandlung des von einem Solargenerator (116) erhaltenen Gleichstroms in einen Wechselstrom, wobei der Solargenerator (116) einen Antrieb aufweist, der eine Ausrichtung des Solargenerators (116) in eine erwünschte Richtung ermöglicht,
**dadurch gekennzeichnet,**
**dass** in den Wechselrichter (200) eine Steuerung (204) integriert ist, die ein Steuersignal für den Antrieb des Solargenerators (116) bereitstellt, um ein Nachführen des Solargenerators (116) nach der Sonne (104) zu bewirken.

2. Wechselrichter nach Anspruch 1, mit:
zumindest einem Sensor (206), der ein Intensitätssignal abhängig von dem auf dem Sensor (206) auftreffenden Licht erzeugt, wobei die Steuerung (204) das Intensitätssignal empfängt und basierend auf dem Intensitätssignal das Steuersignal bereitstellt, und
einem Steuersignalausgang (212), an den die Steuerung (204) das Steuersignal anlegt.

3. Wechselrichter nach Anspruch 1, mit:
einem Sensorsignaleingang (210) zum Empfangen eines Intensitätssignals, das ein externer Sensor (206) abhängig von dem auf den Sensor auftreffenden Licht erzeugt, wobei die Steuerung (204) mit dem Sensorsignaleingang (210) verbunden ist, um das Intensitätssignal zu empfangen und um basierend auf dem Intensitätssignal das Steuersignal zu erzeugen; und
einem Steuersignalausgang (212), an dem die Steuerung (204) das Steuersignal anlegt.

4. Wechselrichter nach Anspruch 3, bei dem der externe Sensor (206) an dem Solargenerator (116) angeordnet ist, oder bei dem der externe Sensor durch ein oder mehrere Solarmodule (102) des Solargenerators (116) gebildet ist.

5. Wechselrichter nach einem der Ansprüche 1 bis 4, mit:
einem Gleichstromeingang (216) zum Empfangen des durch den Solargenerator (116) erzeugten Gleichstroms;
einer Umwandlungsschaltung (202), die mit dem Gleichstromeingang (216) verbunden ist, zum Umwandeln des Gleichstroms in einen Wechselstrom; und
einem Wechselstromausgang (218), der mit der Umwandlungsschaltung (202) verbunden ist, zum Ausgeben des Wechselstroms.

6. Wechselrichter nach einem der Ansprüche 1 bis 5, mit
einer Steuereinheit, die die Umwandlung des Gleichstroms in den Wechselstroms steuert, wobei die Steuerung (204) zur Erzeugung des Steuersignals für den Antrieb des Solargenerators (116) in die Steuereinheit integriert ist.

7. Solaranlage, mit:
einem Solargenerator (116); und
einem Wechselrichter nach einem der Ansprüche 1 bis 6.

## Claims

1. Inverter for converting the direct current obtained by a solar generator (116) to alternating current, wherein the solar generator (116) comprises a drive allowing orientation of the solar generator (116) to a desired direction,
**characterized by**
a control (204) being integrated in the inverter (200), which provides a control signal for the drive of the solar generator (116) for effecting tracking the solar generator (116) after the sun (104).

2. Inverter according to claim 1, comprising:
at least one sensor (206) generating an intensity signal in dependence on the light impinging on the sensor (206), wherein the control (204) receives the intensity signal and provides the control signal based on the intensity signal, and
a control signal output (212) to which the control (204) applies the control signal.

3. Inverter according to claim 1, comprising:
a sensor signal input (210) for receiving an intensity signal generated by an external sensor (206) in dependence on the light impinging on the sensor,
wherein the control (204) is connected to the sensor signal input (210) for receiving the intensity signal and generating the control signal based on the intensity signal; and
a control signal output (212) to which the control (204) applies the control signal.

4. Inverter according to claim 3, wherein the external sensor (206) is mounted on the solar generator (116) or wherein the external sensor is formed by one or several solar modules (102) of the solar generator (116).

5. Inverter according to one of claims 1 to 4, comprising:
a direct current input (216) for receiving the direct current generated by the solar generator (116);
a conversion circuit (202) connected to the direct current input (216) for converting the direct current to alternating current; and
an alternating current output (218) connected to the conversion circuit (202) for outputting the alternating current.

6. Inverter according to one of claims 1 to 5, comprising:
a control unit controlling the conversion of the direct current to the alternating current, wherein the control (204) for generating the control signal for the drive of the solar generator (116) is integrated in the control unit.

7. Solar plant, comprising:
a solar generator (116); and
an inverter according to one of claims 1 to 6.

## Revendications

1. Onduleur pour transformer le courant continu obtenu d'un générateur solaire (116) en un courant alternatif, le générateur solaire (116) présentant un entraînement qui permet une orientation du générateur solaire (116) dans une direction désirée,
**caractérisé par le fait**
**que** dans l'onduleur (200) est intégrée une commande (204) qui met à disposition un signal de commande de l'entraînement du générateur solaire (116), pour provoquer un guidage du générateur solaire (116) suivant le soleil (104).

2. Onduleur selon la revendication 1, avec:
au moins un capteur (206) qui génère un signal d'intensité en fonction de la lumière incidente sur le capteur (206), la commande (204) recevant le signal d'intensité et mettant à disposition le signal de commande sur base du signal d'intensité, et
une sortie de signal de commande (212) à laquelle est présente la commande (204) du signal de commande.

3. Onduleur selon la revendication 1, avec:
une entrée de signal de capteur (210) destinée à recevoir un signal d'intensité que génère un capteur externe (206) en fonction de la lumière incidente sur le capteur, la commande (204) étant reliée à l'entrée de signal de capteur (210), pour recevoir le signal d'intensité et pour générer le signal de commande sur base du signal d'intensité; et
une sortie de signal de commande (212) à laquelle est présente la commande (204) du signal de commande.

4. Onduleur selon la revendication 3, dans lequel le capteur externe (206) est disposé sur le générateur solaire (116), ou dans lequel le capteur externe est constitué par un ou plusieurs modules solaires (102) du générateur solaire (116).

5. Onduleur selon l'une des revendications 1 à 4, avec:
une entrée de courant continu (216) destinée à recevoir le courant continu généré par le générateur solaire (116);
un circuit de transformation (202) qui est relié à l'entrée de courant continu (216), destiné à convertir le courant continu en un courant alternatif; et
une sortie de courant alternatif (218), qui est reliée au circuit de transformation (202), destiné à sortir le courant alternatif.

6. Onduleur selon l'une des revendications 1 à 5, avec
une unité de commande qui commande la transformation du courant continu en courant alternatif, la commande (204) destinée à générer le signal de commande de l'entraînement du générateur solaire (116) étant intégrée dans l'unité de commande.

7. Installation d'énergie solaire, avec:
un générateur solaire (116); et
un onduleur selon l'une des revendications 1 à 6.
